(19) Europäisches Patentamt
European Patent Office
Office européen des brevets

(11) **EP 1 847 957 A2**

(12) **EUROPEAN PATENT APPLICATION**

(43) Date of publication:
**24.10.2007 Bulletin 2007/43**

(51) Int Cl.:
**G06T 5/00** (2006.01)

(21) Application number: **07106129.5**

(22) Date of filing: **13.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **18.04.2006 JP 2006114639**

(71) Applicant: **Pioneer Corporation**
**Meguro-ku,**
**Tokyo (JP)**

(72) Inventors:
• **Okumichi, Kenji**
**Tokyo Yamanashi (JP)**
• **Kawaguchi, Hirofumi**
**Chuo-shi Yamanashi (JP)**

(74) Representative: **Betten & Resch**
**Patentanwälte,**
**Theatinerstrasse 8**
**80333 München (DE)**

(54) **Noise reduction apparatus of frame recursive type**

(57)    Disclosed is a noise reduction apparatus of a frame recursive type which can reduce occurrence of an afterimage phenomenon such as blurring or trailing of contours of motion images even when the difference between image frames is small. In the noise reduction apparatus, a frame recursive type filter generates a differential image signal representing a difference between a current input image signal and a delayed image signal obtained by delaying the input image signal by at least one frame period, reduces noise in the differential image signal thereby to generate a feedback image signal, and adds the feedback image signal to the current input image signal. A level adjuster adjusts a level of the feedback image signal to a lower level as a level of a luminance or color component of the input image signal is decreased.

FIG. 2

**EP 1 847 957 A2**

**Description**

BACKGROUND OF THE INVENTION

1. Field of the Invention

The present invention relates to a technique for reducing noise in an image signal.

2. Description of the Related Art

In motion images, there is usually strong correlation between image frames that are sequentially ordered in time. There is further a known fact that correlation is very low between noise components contained in the image frames that are sequentially ordered in time. As a technique for reducing the noise based on that known fact, a noise reduction technique of a frame recursive type is known.

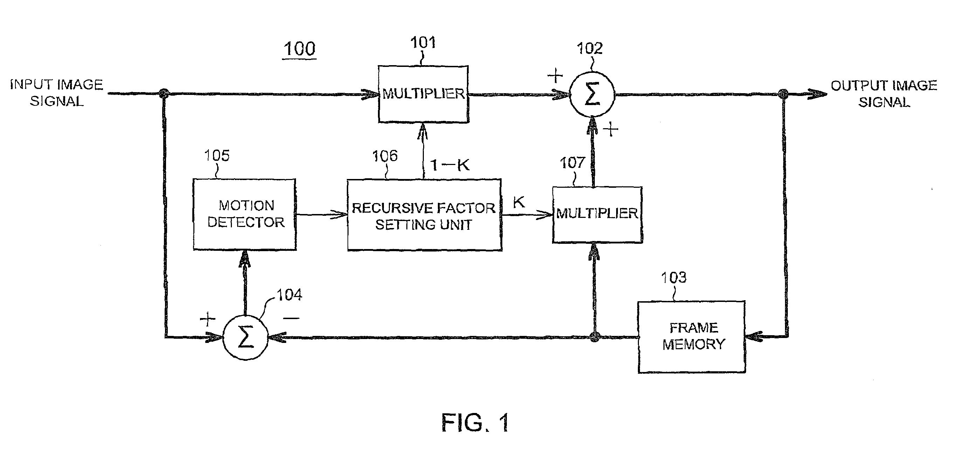

Fig. 1 is a diagram showing a schematic configuration of a conventional noise reduction apparatus 100 of the frame recursive type. In this noise reduction apparatus 100, an input image signal is a digital image signal such as a luminance signal (Y signal), color-difference signals (Cb signal and Cr signal), primary color signals (R signal, G signal and B signal) or the like. A multiplier 7.01 multiplies the input image signal by a first gain coefficient (=1-K) supplied from a recursive factor setting unit 106. An adder 102 adds the output of the first multiplier 101 with the output of a second multiplier 107, and outputs the result as an output image signal. A frame memory 103 delays the output image signal by one frame period and then supplies the delayed image signal to both a subtracter 104 and a second multiplier 107. The subtracter 104 subtracts the delayed image signal from the input image signal to generate a differential image signal representing the difference between frames, and supplies the differential image signal to a motion detector 105. The motion detector 105 detects a motion amount on the basis of the differential image signal, and supplies the motion amount to the recursive factor setting unit 106.

When the motion amount is large, the recursive factor setting unit 106 judges that the correlation between the frames is low, and then sets a second gain coefficient (=K) to a low value. On the other hand, when the motion amount is small, the recursive factor setting unit 1.06 judges that the correlation between the frames is high, and then sets the second gain coefficient (=K) to a high value. The second multiplier 107 multiplies the delayed image signal supplied from the frame memory 103 by the second gain coefficient to generate a feedback image signal, and supplies the feedback image signal to the adder 102. As described above, when the motion amount is small, the recursive factor setting unit 106 sets the second gain coefficient causing the recursive amount of the delayed image signal, that is, the level of the feedback image signal to be high. When the motion amount is large, the recursive factor setting unit 106 sets the second gain coefficient causing the recursive amount to be low.

In the noise reduction apparatus 100 described above, as the value of the second gain coefficient (=K) is larger, the recursive amount of the delay image signal is increased, and thus the effect of reducing the noise is more visible. However, when the effect of reducing the noise is enhanced, an afterimage phenomenon such as blurring or trailing of the contour of the motion image occurs and lowers image quality. Specifically, in the case where the effect of reducing the noise is enhanced, when an object of the motion image on a display screen moves, such a phenomenon that the contour of the object is displayed to be blurred (i.e., the blurring of the contour of the motion image) may occur. Further, such a phenomenon that the contour of the object of the motion image on the display screen is displayed to leave a trail (i.e., the trailing of the contour) may occur.

Particularly, when the difference between the image frames is small, the motion detector 105 can fail in detection of the motion amount. In this case, the recursive factor setting unit 106 cannot set a recursive factor with respect to the delayed image signal to a proper value, thus causing blurring or trailing of the contour of the motion image to occur.

The noise reduction technique of the frame recursive type as described above is disclosed in, for example, Japanese Patent Application Publication (Kokai) No. 2005-311575, the specification of USP No. 6,094,233 (based on the patent application of the Japanese Patent Application Publication No. 2005-311575), and Japanese Patent Application Publication (Kokai) No. 8-149343.

SUMMARY OF THE INVENTION

In view of the foregoing, it is an object of the present invention to provide a noise reduction apparatus of the frame recursive type which can reduce occurrence of the afterimage phenomenon such as blurring or trailing of the contours of motion images even when the difference between the image frames is small.

According to a first aspect of the present invention, there is provided a noise reduction apparatus of a frame recursive type which reduces noise in an input image signal. The noise reduction apparatus comprises: a frame recursive type filter for generating a differential image signal representing a difference between a current input image signal and

**2**

a delayed image signal that is obtained by delaying the input image signal by at least one frame period, reducing noise in the differential image signal thereby to generate a feedback image signal, and adding the feedback image signal to the current input image signal; and a level adjuster for adjusting a level of the feedback image signal to a lower level as a level of a luminance or color component of the input image signal is decreased.

According to a second aspect of the present invention, there is provided a noise reduction apparatus of a frame recursive type which reduces noise in an input image signal. The noise reduction apparatus comprises: a frame recursive type filter for generating a differential image signal representing a difference between a current input image signal and a delayed image signal that is obtained by delaying the input image signal by at least one frame period, reducing noise in the differential image signal thereby to generate a feedback image signal, and adding the feedback image signal to the current input image signal; a frequency analyzer for measuring a spatial frequency distribution of the current input image signal; and a level adjuster for adjusting a level of the feedback image signal to a lower level as a ratio of a low frequency band component to the current input image signal is increased, on the basis of the measured spatial frequency distribution.

According to a third aspect of the present invention, there is provided a noise reduction apparatus of a frame recursive type which reduces noise in an input image signal. The noise reduction apparatus comprises: a frame recursive type filter for generating a differential image signal representing a difference between a current input image signal and a delayed image signal that is obtained by delaying the input image signal by at least one frame period, reducing noise in the differential image signal thereby to generate a feedback image signal, and adding the feedback image signal to the current input image signal; a hue analyzer for measuring a hue angle on the basis of a color difference component of the input image signal; and a level adjuster for adjusting a level of the feedback image signal to a lower level as the measured hue angle is nearer to a predetermined angle.

Further features of the invention, its nature and various advantages will be more apparent from the accompanying drawings and the following detailed

description of the preferred embodiments.

BRIEF DESCRIPTION OF THE DRAWINGS

Fig. 1 is a diagram showing the schematic configuration of a conventional noise reduction apparatus of the frame recursive type;
Fig. 2 is a diagram showing a schematic configuration of a noise reduction apparatus of the frame recursive type according to a first embodiment of the present invention;
Fig. 3A is a graph showing a relationship between a motion amount and a recursive coefficient;
Fig. 3B is a graph showing a relationship between an input signal level and a gain coefficient;
Fig. 4 is a diagram showing a schematic configuration of a noise reduction apparatus of the frame recursive type according to a modification of the first embodiment of the present invention;
Fig. 5 is a diagram showing a schematic configuration of a noise reduction apparatus of the frame recursive type according to a second embodiment of the present invention;
Fig. 6 is a diagram showing a part of a configuration of the noise reduction apparatus of the frame recursive type according to the second embodiment;
Fig. 7 is a diagram showing a schematic configuration of a noise reduction apparatus of the frame recursive type according to a third embodiment of the present invention;
Fig. 8A is a graph illustrating a hue angle;
Fig. 8B is a graph illustrating a relationship between the hue angle and the gain coefficient; and
Fig. 9 is a diagram showing a schematic configuration of a noise reduction apparatus of the frame recursive type according to a fourth embodiment of the present invention.

DETAILED DESCRIPTION OF THE INVENTION

This application is based on Japanese patent application No. 2006-114639, and claims the benefit thereof. The Japanese patent application is hereby incorporated by reference.
Various embodiments of the present invention will be described with reference to the accompanying drawings.

1. First Embodiment

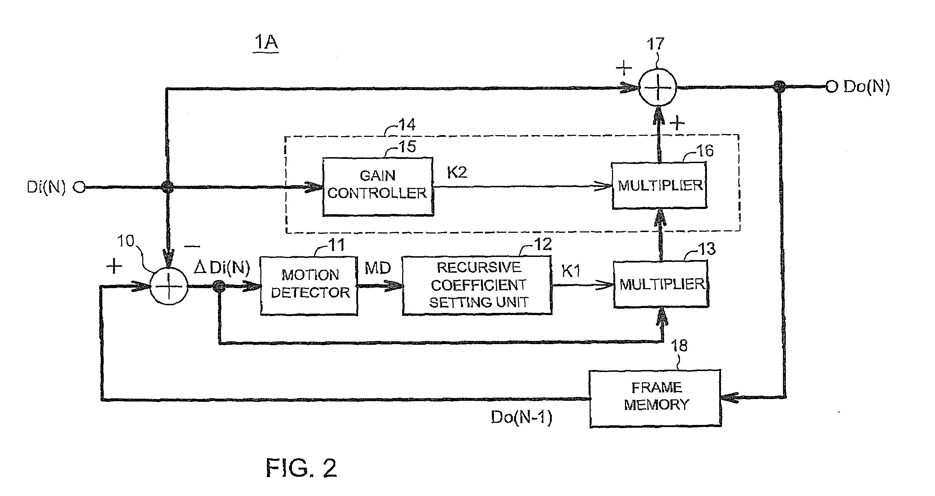

Fig. 2 is a functional block diagram showing a schematic configuration of a noise reduction apparatus 1A of the frame recursive type according to a first embodiment of the present invention. This noise reduction apparatus 1A has a subtracter 10, a motion detector 11, a recursive coefficient setting unit 12, a first multiplier 13, an adder 17 and a frame memory 18. "A frame recursive type filter" can be constructed by these functional blocks 10, 11, 12, 13, 17 and 18. The noise reduction apparatus 1A further has a level adjuster 14 for adjusting the level of a feedback image signal which is an output signal of the first multiplier 13.

First, an operation of the frame recursive type filter will be described. An input image signal Di(N) is a digital image signal such as a luminance signal (Y signal), color difference signals (Cb signal and Cr signal), a primary color signal (R signal, G signal and B signal) or the like, for example. The input image signal Di(N) can be input every image frame or every horizontal line, or can be input every predetermined block comprised of 8x8 pixels, 16x16 pixels or the like. Here, N represents the number of an image frame to which the input image signal belongs. The adder 17 adds the output of the level adjuster 14 to the input image signal Di(N) to generate an output image signal Do(N). The output image signal Do(N) is delayed by one frame period by the frame memory 18, and then output to the subtracter 10. In this embodiment, the frame memory 18 delays the output image signal Do(N) by one frame period, no limitation thereto intended. The output image signal Do(N) can be delayed by, for example, a predetermined number of frame periods.

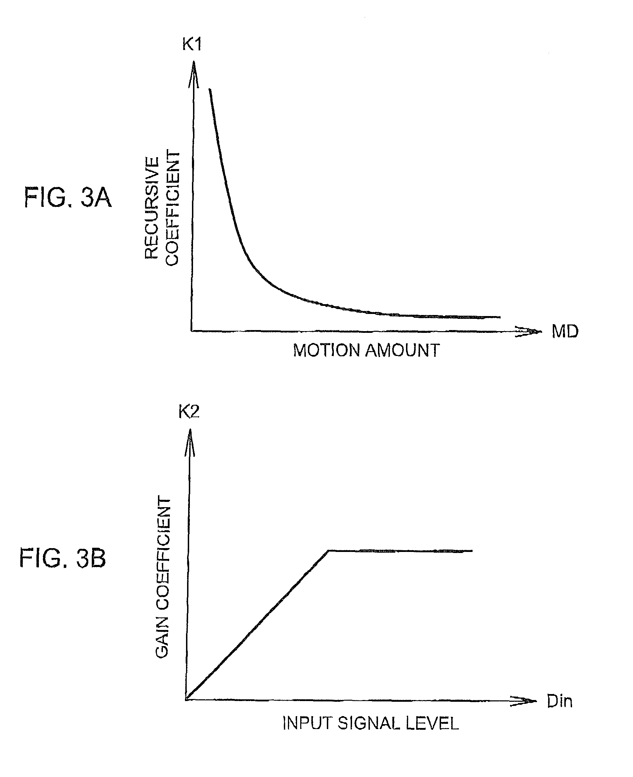

The subtracter 10 generates a differential image signal $\Delta Di(N)$ representing a difference between the delayed image signal Do(N-1) supplied from the frame memory 18 and the input image signal Di(N), and supplies the signal $\Delta Di(N)$ to the motion detector 11. The motion detector 11 detects the motion amount MD between image frames on the basis of the differential image signal $\Delta Di(N)$. The recursive coefficient setting unit 12 calculates a recursive coefficient K1 in accordance with the motion amount MD, and supplies the coefficient K1 to the first multiplier 13. The first multiplier 13 multiplies the differential image signal $\Delta Di(N)$ by the recursive coefficient K1. to generate a feedback image signal. The feedback image signal is supplied through the level adjuster 14 to the adder 17. The adder 17 adds the current input image signal Di(N) and the feedback image signal to generate the output image signal Do(N). Fig. 3A is a graph showing an example of a relationship between the motion amount MD and the recursive coefficient K1. In this graph, a recursive coefficient K1 is set to a lower value as the motion amount MD is larger, and the recursive coefficient K1 is set to a higher value as the motion amount MD is smaller. As described above, motion adaptive noise reduction processing is performed by the motion detector 11, the recursive coefficient setting unit 12 and the first multiplier 13.

In the embodiment of Fig. 2, the motion detector 11 has a function for calculating the motion amount MD by using the differential image signal $\Delta Di(N)$, no limitation thereto intended. The motion detector 11 can have a function for detecting the motion amount MD between a current image represented by the current input image signal Di(N) and a reference image sampled at a forward or backward point in time from the current image. Thus, the motion detector 11 can detect the motion amount MD by using a motion vector supplied from an MPEG decoder (not shown). Alternatively, the motion detector 11 can detect the motion amount MD by using a differential image supplied from the MPEG decoder.

Next, as shown in Fig. 2, the noise reduction apparatus 1A has the level adjuster 14 for adjusting a level of the feedback image signal supplied from the first multiplier 13. This level adjuster 14 is constructed by the gain controller 15 and the second multiplier 16. The gain controller 15 sets a gain coefficient K2 to a lower value as the level Din of the input image signal Di(N) is decreased. Further, the second multiplier 16 adjusts the level of the feedback image signal by weighting the feedback image signal with the gain coefficient K2 that is set by the gain controller 15. Fig. 3B is a graph showing an example of the relationship between the level Din of the input image signal Di(N) and the gain coefficient K2. The gain coefficient K2 is set to a larger value as the input signal level Din is increased. When the input signal level Din exceeds a predetermined level, the gain coefficient K2 is fixed to a constant value.

As described above, there is a case where the motion detector 11 fails in motion detection when the difference between image frames is small. In this case, the recursive coefficient setting unit 12 sets the recursive coefficient K1 to a high value as shown in Fig. 3A, and such an afterimage phenomenon as burring or trailing of the contours of the motion images may occur in the motion images represented by the output image signal Do(N) unless the level of the feedback image signal is adjusted. In such a case, the level adjuster 14 also adjusts the level of the signal so that the level of the feedback image signal is set to a higher value as the level of the input image signal Di(N) is higher, and the level of the feedback image signal is set to a lower value as the level of the input image signal Di(N) is lower. Therefore, occurrence of the afterimage phenomenon such as blurring or trailing of the contour of a motion image can be reduced.

The level controller 15 can detect the level of the input image signal Di(N) on a pixel-by-pixel basis to set the gain coefficient K2 depending on the detected level, or can average the levels of the input image signals Di(N) on a line-by-line basis or on a frame-by-frame basis to set the gain coefficient K2 depending on the averaged level. Alternatively, the level controller 15 can average the levels of the input image signals Di(N) every predetermined block comprised of 8X8 pixels, 16X16 pixels or the like to set the gain coefficient K2 depending on the averaged level.

The afterimage phenomenon such as blurring or trailing of the contours of the motion images is frequently conspicuous due to a low frequency band component of the input image signal Di(N). On the other hand, there is a high probability that lots of noise components are contained in high frequency band components of the input image signal Di(N), and the afterimage phenomenon is not remarkable due to the high frequency band components. Based on the above facts, a modification of the first embodiment will be described.

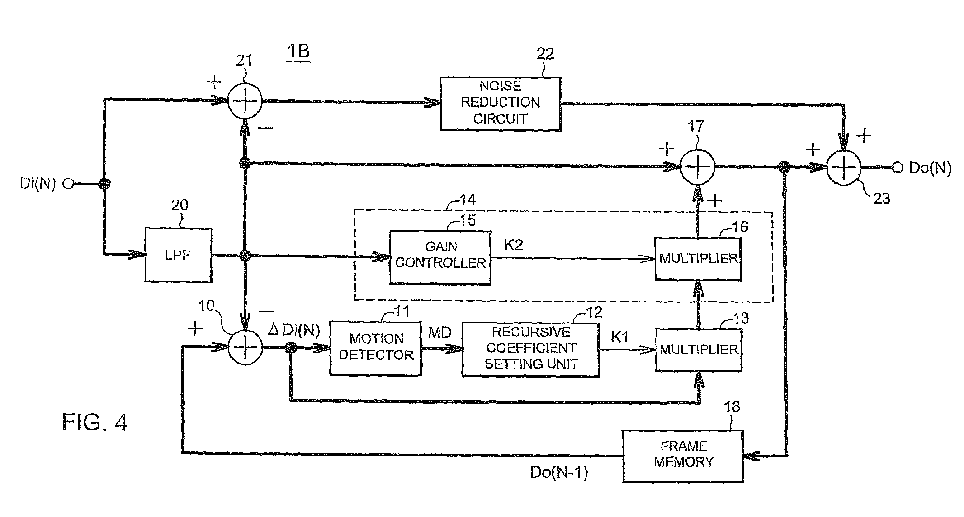

Fig. 4 is a functional block diagram showing the schematic configuration of a noise reduction apparatus of the frame recursive type according to a modification of the first embodiment. A noise reduction apparatus 1B of the modification has a low pass filter (LPF) 20, a subtracter 21, a noise reduction circuit 22 and an adder 23 in addition to the configuration of the noise reduction apparatus 1A. The low pass filter 20 passes only a low frequency band component of the input image signal Di(N). Noise components contained in the low frequency band component can be reduced by the configuration of the noise reduction apparatus 1A of the first embodiment. The subtracter 21 subtracts the output of the low pass filter 20 from the input image signal D1,(N), and outputs a high frequency band component. Noise components contained in the high-band component are reduced by the noise reduction circuit 22 of the frame recursive type. The configuration of the noise reduction apparatus 1A according to the first embodiment or the conventional noise reduction circuit can be used as a configuration of the noise reduction circuit 22. The adder 23 adds the output of the adder 17 with the output of the noise reduction circuit 22 to generate an output image signal Do(N).

The noise reduction apparatus 1B of the modification removes the noise components contained in the low-band component of the input image signal Di(N) by using the noise reduction apparatus 1A of the first embodiment, and thus the afterimage phenomenon such as blurring or trailing of the contours of the motion images can be reduced. In addition, the noise components contained in the high-band component of the input image signal Di(N) are reduced by the noise reduction circuit 22 of the frame recursive type. Accordingly, the effect of reducing the noise can be relatively enhanced.

2. Second Embodiment

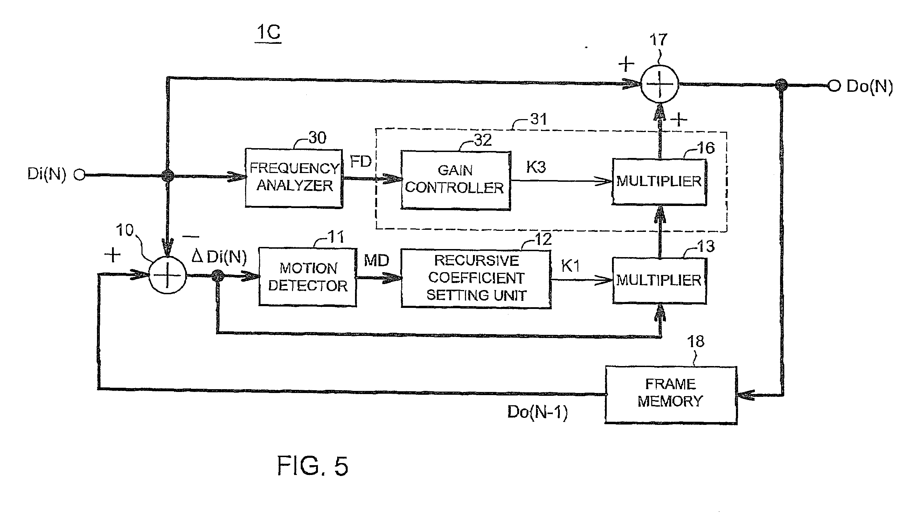

A second embodiment of the present invention will be described. Fig. 5 is a functional block diagram showing a schematic configuration of a noise reduction apparatus 1C of the frame recursive type according to the second embodiment. The components designated by the same reference numeral, in Figs. 2 and 5 have the same function, and thus the detailed description of the components is omitted. As described above, the afterimage phenomenon such as blurring or trailing of the contours of the motion images is conspicuous due to the low-band component of the input image signal Di(N). Thus, it is necessary to suppress the noise reduction processing for the low-band component of the input image signal Di(N).

A configuration of the noise reduction apparatus 1C according to the second embodiment includes a frequency analyzer 30 and a level adjuster 31. In this respect, the configuration of the noise reduction apparatus 1C is different from the configuration of the noise reduction apparatus 1A according to the first embodiment, and nevertheless has the same basic configuration as the configuration of the noise reduction apparatus 1A. The frequency analyzer 30 has a function for measuring the frequency distribution FD of the input image signal Di(N). The level adjuster 31 has a function for adjusting the level of the feedback image signal on the basis of a spatial frequency distribution FD measured by the frequency analyzer 30 such that the level of the feedback image signal is set to a lower level as a ratio of a low frequency band component to the input image signal Di(N) is increased. Specifically, the level adjuster 31 includes a gain controller 32 that sets a gain coefficient K3 on the basis of the spatial frequency distribution FD measured by the frequency analyzer 30, and a second multiplier 16 that multiplies the feedback image signal by the gain coefficient K3.

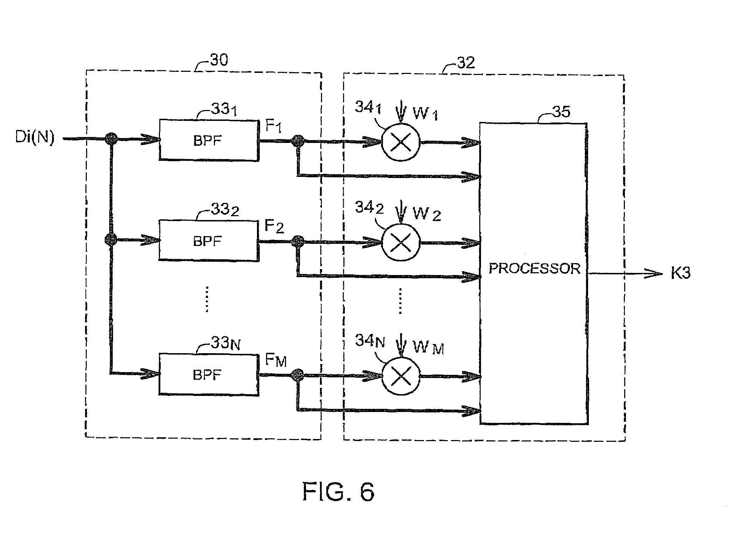

Fig. 6 is a diagram showing a schematic configuration of the frequency analyzer 30 and the gain controller 32. The frequency analyzer 30 has a filter bank for dividing the input image signal Di(N) into a plurality of frequency band components. This filter bank is constructed by a plurality of band pass filters (BPF) $33_1$, $33_2$, ..., $33_M$ (where, M represents an integer larger than 3) having different pass bands. The band pass filters $33_1$, $33_2$, ..., $33_M$ output frequency band components $F_1$, $F_2$, ..., $F_M$ to the gain controller 32. In the gain controller 32, multiplies $34_1$, $34_2$, ..., $34_M$ weight the respective frequency band components $F_1$, $F_2$, ..., $F_M$ with their corresponding coefficients $W_1$, $W_2$,..., $W_M$, and supply the weighting results to the processor 35. The processor 35 can calculate the gain coefficient K3 in accordance with the following equation (1), for example:

$$K3 = \frac{F_1 \times W_1 + F_2 \times W_2 + \cdots + F_M \times W_M}{F_1 + F_2 + \cdots + F_M}, \quad (1)$$

where, the coefficients $W_1$, $W_2$, ..., $W_M$ can be set to smaller values as respective pass bands of the corresponding band pass filters $33_1$, $33_2$, ..., $33_M$ are lower. That is, when the pass bands of the band pass filters $33_1$, $33_2$, ..., $33_M$ are represented by $\Delta f_1$, $\Delta f_2$, ..., $\Delta f_M$ respectively, the coefficients $W_1$, $W_2$, ..., $W_M$ can be set so that the relation $W_1 > W_2 > ... > W_M$ is satisfied for the relation $\Delta f_1 > \Delta f_2 > ... > \Delta f_M$. Accordingly, the gain coefficient K3 can be set to a smaller value as a rate of the low frequency band component to the input image signal Di(N) is larger.

Fig. 6 shows a one-dimensional filter bank that divide the input image signal Di(N) into a plurality of frequency band components in either a horizontal spatial frequency direction or a vertical spatial frequency direction, no limitation thereto intended. Alternatively, the frequency analyzer 30 of Fig. 6 may be constructed by a two-dimensional filter bank that divide the input image signal Di(N) into a plurality of frequency band components in both the horizontal spatial frequency direction and the vertical spatial frequency direction.

As described above, the noise reduction apparatus 1C according to the second embodiment adjusts the level of the feedback image signal to a lower level as a ratio of the low frequency band components to the input image signal Di(N) is increased. Therefore, in the case where the difference between the image frames is small, even when the motion detector 11 fails in motion detection, the noise reduction apparatus 1C allows to reduce occurrence of the afterimage phenomenon such as blurring or trailing of the contours of motion images due to the low frequency band components of the input image signal Di(N).

In addition to the configuration shown in Fig. 5, the noise reduction apparatus 1C may be constructed by a low pass filter (LPF) 20, a subtracter 21, a noise reduction circuit 22 and an adder 23 as shown in Fig. 4.

3. Third Embodiment

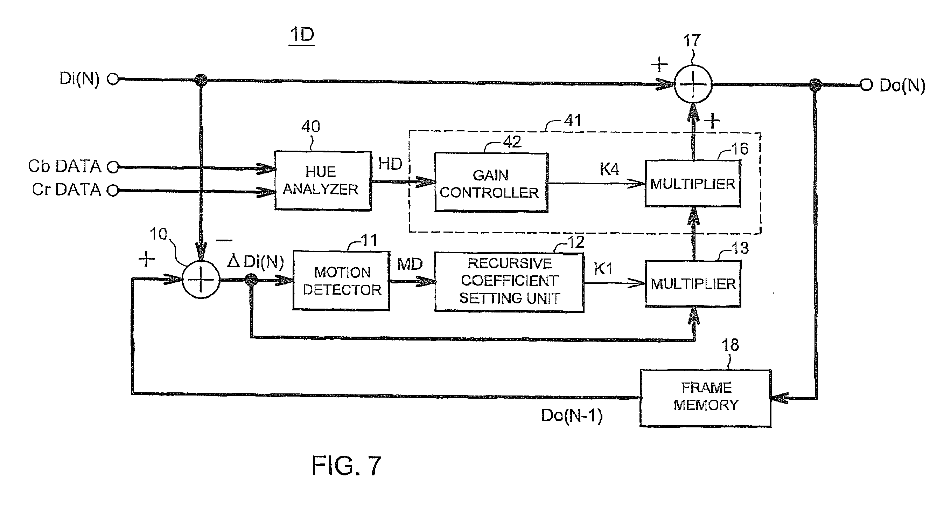

A third embodiment of the present invention will be described. Fig. 7 is a functional block diagram showing a schematic configuration of a noise reduction apparatus 1D of the frame recursive type according to the third embodiment. The components designated by the same reference in Figs. 7 and 2 have the same function, and thus the detailed description of the components is omitted.

The configuration of the noise reduction apparatus 1D according to the third embodiment includes a hue analyzer 40 and a level adjuster 41. In this respect, the configuration of the noise reduction apparatus 1D is different from the configuration of the noise reduction apparatus 1A according to the first embodiment, and nevertheless has the same basic configuration of the noise reduction apparatus 1A. The hue analyzer 40 includes a hue analyzer 40 that measures a hue angle of the input image signal D1(N) based on color difference signals (Cr data and Cb data) of the input image signal Di(N), and includes a level adjuster 41 that adjusts the level of the feedback image signal to a lower level as the measured hue angle is nearer to a predetermined angle. Specifically, the level adjuster 41 includes a gain controller 42 that sets a gain coefficient K4 to a lower value as the hue angle is nearer to the predetermined angle, and includes a second multiplier 16 that multiplies the feedback image signal by the gain coefficient K4 and supplies the result to the adder 17.

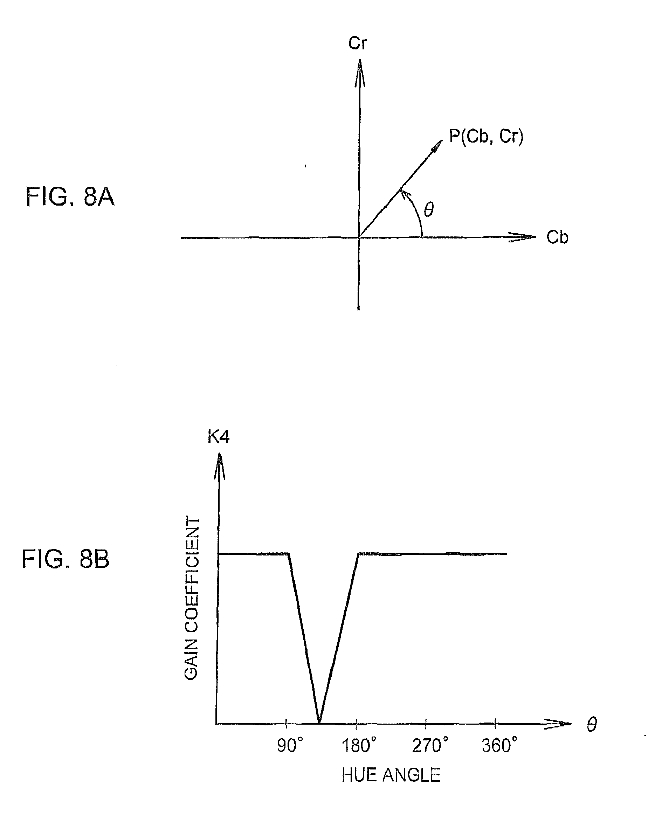

As shown in Fig. 8A, a color space can be formed by the color difference signals Cr, Cb. The line from the origin to the point P(Cb, Cr) representing a combination of levels of the color difference signals Cb, Cr makes an angle $\theta$ to the axis of the color difference signal Cb. The angle $\theta$ can be defined as the hue angle. The gain controller 42 of Fig. 7 sets the gain coefficient K4 to a smaller value as the hue angle $\theta$ is nearer to about 135° as shown in Fig. 8B. The hue angle $\theta$ around about 135° corresponds to flesh color, and corresponds to an angle range where the afterimage phenomenon such as blurring or trailing of the contours of motion images is clearly visible. The noise reduction apparatus 1D according to the third embodiment adjusts the level of the feedback image signal to a lower level as the hue angle $\theta$ is nearer to that angle range. Accordingly, in the case where the difference between the image frames is small, even when the motion detector 11 fails in motion detection, The noise reduction apparatus 1D allows to reduce occurrence of the afterimage phenomenon such as blurring or trailing of the contours of motion images.

The noise reduction apparatus 1D may be constructed by the low pass filter (LPF) 20 as shown in Fig. 4, the subtracter 21, the noise reduction circuit 22 and the adder 23 in addition to the configuration shown in Fig. 7.

4. Fourth Embodiment

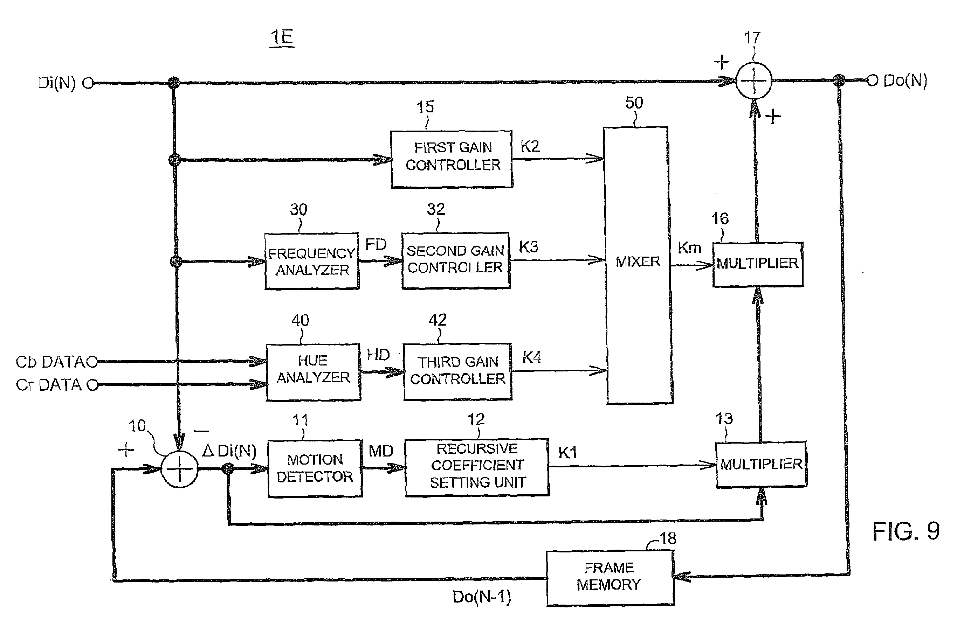

Next, a fourth embodiment of the present invention will be described. Fig. 9 is a functional block diagram showing a schematic configuration of a noise reduction apparatus 1E of the frame recursive type according to the fourth embodiment. The components designated by the same reference numeral in Figs. 9 and 2 have the same function, and thus the detailed description of the components is omitted.

The noise reduction apparatus 1E according to the fourth embodiment has the configuration of the first embodiment, and further has the configuration of the second and third embodiments as means for adjusting the gain of the feedback image signal. That is, the first gain controller 15 sets the gain coefficient K2 to a lower value as the level Din of the input image signal Di(N) is lower, and supplies the gain coefficient K2 to the mixer 50. The frequency analyzer 30 measures a spatial frequency distribution FD of the input image signal Di(N). The gain controller 32 sets the gain coefficient K3 on the basis of the measured spatial frequency distribution FD and supplies the gain coefficient K3 to the mixer 50. The hue analyzer 40 measures the hue angle $\theta$ of the input image signal Di(N). The gain controller 42 sets the gain coefficient K4 to a smaller value as the measured hue angle $\theta$ is nearer to the predetermined angle, and supplies the coefficient K4 to the mixer 50.

The mixer 50 generates the gain coefficient Km on the basis of the gain coefficients K2, K3, K4. The second multiplier 16 multiplies the feedback image signal by the gain coefficient Km supplied from the mixer 50, and supplies the result to the adder 17. The gain coefficient Km can be generated according to the following equation (2) :

$$Km = \frac{K2 \times t1 + K3 \times t2 + K4 \times t3}{t1 + t2 + t3}, \quad (2)$$

where t1, t2, and t3 represent weighting coefficients.

The noise reduction apparatus 1E may be constructed by the low pass filter (LPF) 20, the subtracter 21, the noise reduction circuit 22 and the adder 23 as shown in Fig. 4, in addition to the configuration shown in Fig. 5.

**Claims**

1. A noise reduction apparatus of a frame recursive type which reduces noise in an input image signal, said noise reduction apparatus comprising:

   a frame recursive type filter for generating a differential image signal representing a difference between a current input image signal and a delayed image signal that is obtained by delaying the input image signal by at least one frame period, reducing noise in the differential image signal thereby to generate a feedback image signal, and adding the feedback image signal to the current input image signal; and
   a level adjuster for adjusting a level of the feedback image signal to a lower level as a level of a luminance or color component of the input image signal is decreased.

2. The noise reduction apparatus of the frame recursive type according to claim 1, wherein said level adjuster includes:

   a multiplier for weighting the feedback image signal with a gain coefficient to adjust the level of the feedback image signal; and
   a gain controller for adjusting the gain coefficient to a lower value as the level of a luminance component or color component of the input image signal is decreased.

3. A noise reduction apparatus of the frame recursive type which reduces noise in an input image signal, said noise reduction apparatus comprising:

   a frame recursive type filter for generating a differential image signal representing a difference between a current input image signal and a delayed image signal that is obtained by delaying the input image signal by at least one frame period, reducing noise in the differential image signal thereby to generate a feedback image signal, and adding the feedback image signal to the current input image signal;
   a frequency analyzer for measuring a spatial frequency distribution of the current input image signal; and
   a level adjuster for adjusting a level of the feedback image signal to a lower level as a ratio of a low frequency band component to the current input image signal is increased, on the basis of the measured spatial frequency distribution.

4. The noise reduction apparatus of the frame recursive type according to claim 3, wherein said frequency analyzer includes a filter bank for dividing the current input image signal into a plurality of frequency band components.

5. The noise reduction apparatus of the frame recursive type according to claim 3 or 4, wherein the level adjuster includes:

   a multiplier for weighting the feedback image signal with a gain coefficient to adjust the level of the feedback image signal; and
   a gain controller for adjusting the gain coefficient to a lower value as a ratio of a low frequency band component to the current input image signal is increased, on the basis of the measured spatial frequency distribution.

6. A noise reduction apparatus of the frame recursive type which reduces noise in an input image signal, said noise reduction apparatus comprising:

a frame recursive type filter for generating a differential image signal representing a difference between a current input image signal and a delayed image signal that is obtained by delaying the input image signal by at least one frame period, reducing noise in the differential image signal thereby to generate a feedback image signal, and adding the feedback image signal to the current input image signal;

a hue analyzer for measuring a hue angle on the basis of a color difference component of the input image signal; and

a level adjuster for adjusting a level of the feedback image signal to a lower level as the measured hue angle is nearer to a predetermined angle.

7. The noise reduction apparatus of the frame recursive type according to claim 6, wherein said level adjuster includes:

a multiplier for weighting the feedback image signal with a gain coefficient to adjust the level of the feedback image signal; and

a gain controller for adjusting the gain coefficient to a lower value as the hue angle is nearer to the predetermined angle.

8. The noise reduction apparatus of the frame recursive type according to claim 6 or 7, wherein the predetermined angle is equal to about 135°.

9. The noise reduction apparatus of the frame recursive type according to any one of claims 1 to 8, wherein said frame recursive type filter performs motion-adaptive processing to reduce the noise, said motion-adaptive processing being performed to decrease a level of the differential image signal as a motion amount between a current image represented by the current input image signal and a reference image sampled at a forward or backward point in time from the current image is larger.

10. The noise reduction apparatus of the frame recursive type according to claim 9, further comprising a low pass filter for outputting an input image signal to be provided to said frame recursive type filter.

INPUT IMAGE SIGNAL

OUTPUT IMAGE SIGNAL

100

101 MULTIPLIER

1−K

102 Σ

+ +

107 MULTIPLIER

K

106 RECURSIVE FACTOR SETTING UNIT

105 MOTION DETECTOR

104 Σ

+ −

103 FRAME MEMORY

FIG. 1

9

FIG. 2

EP 1 847 957 A2

FIG. 3A

K1

RECURSIVE COEFFICIENT

MOTION AMOUNT

MD

FIG. 3B

K2

GAIN COEFFICIENT

INPUT SIGNAL LEVEL

Din

FIG. 4

EP 1 847 957 A2

FIG. 5

EP 1 847 957 A2

FIG. 6

FIG. 7

FIG. 8A

FIG. 8B

FIG. 9

EP 1 847 957 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005311575 A
- US 6094233 A
- JP 8149343 A
- JP 2006114639 A